# EUROPEAN PATENT SPECIFICATION

(11) **EP 2 830 800 B1**
(45) Date of publication and mention of the grant of the patent: **03.05.2017**
(21) Application number: 13723234.4
(22) Date of filing: 28.03.2013
(51) Int. Cl.: B23D 25/04, B23D 36/00

(54) **A METHOD FOR CUTTING MOVING MANUFACTURED ARTICLES**
VERFAHREN ZUM SCHNEIDEN LAUFENDER HERGESTELLTER ARTIKEL
PROCÉDÉ DE COUPE D'ARTICLES MANUFACTURÉS EN MOUVEMENT

(30) Priority: 28.03.2012 IT MO20120082
(43) Date of publication of application: 04.02.2015
(73) Proprietor: FIVES OTO S.P.A., 42022 Boretto, Reggio Emilia (IT)
(72) Inventor: CHEZZI, Aleardo, 42022 Boretto (reggio Emilia) (IT); ANESI, Andrea, 42049 Sant'ilario D'enza (reggio Emilia) (IT); VECCHINI, Gianluca, 43123 Parma (IT)
(74) Representative: Casadei, Giovanni
(86) International application number: PCT/IB2013/052486
(87) International publication number: WO 2013/144896

(56) References cited:
- EP-A1- 1 462 200
- US-A- 3 982 454
- US-A- 4 739 490

## Description

The present invention relates to a method for cutting manufactured articles. The method is in particular applicable to manufactured articles exhibiting a mainly longitudinal extension axis. In other words, this method is applicable to manufactured articles made with a continuous process, such as, by way of example, tubes, rods, beams or other manufactured articles by bending and subsequent welding or extrusion or other processes still. Document US3982454A represents an example of the prior art disclosing the preambles of claim 1 and claim 5. In the prior art, a method for cutting manufactured articles comprises a step of advancing a manufactured article, for example a metal tube, along an advancing direction at a constant speed. A cutting device is associated to the manufactured article, and is mobile independently along the advancement direction. In particular, the cutting device is mobile from a stroke start position to a stroke end position.

In order to cut a series of article portions having a uniform and predetermined length, a cutting zone is identified on the article. The cutting device is then advanced, and the speed of advancement thereof is synchronized with the speed of advancement of the article, such as to position the cutting device at the predetermined zone of the article to be cut.

The cutting device is then activated, such as to cut a portion of the manufactured article. Subsequently the cutting device retreats up to the cycle start position. At this point it is possible to proceed with a new step of advancement such as to cut a further portion of article.

During the normal production of segments of articles, for example segments of tube of a predetermined length, the need might arise to extract a sample so as to perform verifications, tests or other controls relating to quality control, so as to satisfy the existing norms and standards. These sample articles also consist of segments of manufactured article, for example pieces of tube, but exhibit a length that can be very much smaller than the segments under production.

In this case, one of the possible methods used consists in collecting, using a special device, a segment of article downstream of the cutting device and then cut it again to extract the sample with a further cutting device (and thus incur further costs).

The remaining part of the segment from which the sample is collected must disadvantageously be rejected, as it is no longer in conformity with the required length of the ordered batch under production.

Further, also in a case where it was possible to cut a single segment exhibiting a greater length of the length of the sample, it would in any case be disadvantageously necessary to avail of a further device for performing the collection, cutting and subsequent re-positioning of the sample in-line. This necessarily leads to incurring added costs and the presence of further unwieldy apparatus.

In this context, the technical objective underpinning the present invention is to provide a method for cutting manufactured articles which obviates the above-cited drawbacks in the prior art.

In particular, an aim of the present invention is to provide a method for cutting manufactured articles able to collect samples of the articles, avoiding waste of tube and reducing the dimensions of the equipment needed.

The set aims are substantially attained with a method for cutting manufactured articles comprising the technical characteristics set out in one or more of the accompanying claims.

Further characteristics and advantages of the present invention will more fully emerge from the description of a preferred but not exclusive embodiment of a cutting method for manufactured articles, as illustrated in the accompanying drawings which in figures from 1 to 5 illustrate a schematic lateral view of a machine for cutting manufactured articles which carries out a method for cutting articles according to the present invention. With reference to the accompanying figures, 1 denotes a machine for cutting manufactured articles "M" able to implement a method for cutting manufactured articles "M" according to the present invention.

The machine 1 comprises a guide 2 orientated along an advancement direction "A" of a manufactured article "M". A cutting device 3 is associated to the guide 2. In particular, the cutting device 3 is mobile along the guide 2, and is associable to the manufactured article "M" such that it also advances along the advancement direction "A".

Further, the cutting device 3 is mobile from a stroke start position to a stroke end position. The cutting device 3 is therefore mobile along the advancement direction such as to perform a cut on the manufactured article "M" in motion. The cutting device 3 is not described in detail as it is of known type to a person skilled in the art, and is in any case variable according to the specific nature of the manufactured article "M" to be cut.

The machine 1 further comprises synchronisation means (not illustrated) able to regulate the speed of advancement of the cutting device 3 to make it coincide with the speed of advancement of the manufactured article "M". In particular, the synchronization means comprise detecting means (not illustrated) able to identify a predetermined first cutting zone "Z1 on the manufactured article "M". The first cutting zone will be localized according to the position of a free end "L" of the manufactured article "M" and the required length of the segments "S" to be produced.

The synchronising means further comprise a control device able to position the cutting device 3 at the first cutting zone "Z1 ". More in general, the control device is able to guide the cutting device 3 on any cutting zone identified by the detecting means.

A machine such as the one described above is further able to collect samples "C" from the manufactured article "M" to be cut, according to the method that will be described in the following. To displace the samples "C" out of the production line, the machine 1 comprises means for evacuation 4 of a portion "P2" of the manufactured article "M".

According to the present invention, the means for evacuation 4 are mobile along the guide 2 and are solidly constrained to the cutting device 3, such as to translate along the guide 2 together with the cutting device 3.

In detail, the machine 1 comprises a carriage 5, mobile along the guide 2, to which the cutting device 3 is fixed. The preferred embodiment shows, by way of example of the means for evacuation 4, a chute 6 fixed to the carriage 5. The method for cutting manufactured articles "M" operates in the following way. Firstly a manufactured article "M" is advanced along an advancement direction "A" at a predetermined speed. The manufactured article "M" to be cut preferably moves at a constant speed. By way of example, the manufactured article "M" can be a tube produced using a continuous process, where there is a need to cut segments "S" of a predetermined length and, in particular, uniform.

The cutting device 3 is then predisposed, associated to the manufactured article "M" and mobile along the advancement direction "A". The cutting device 3 is advanced along the advancement direction "A", in particular the speed of advancement of the cutting device 3 is synchronized with the speed of advancement of the manufactured article "M", such as to position the cutting device 3 at a predetermined first cutting zone "Z1" identified on the manufactured article.

The cutting device 3 is then activated, such as to cut a first portion "P1" of the manufactured article "M". The first portion "P1", once cut, defines the segment "S" under production.

The cutting device 3 is then retracted, in particular back to the cycle start position.

Note that the steps of synchronization and activation of the cutting device 3 are comprised between the advancement step and a corresponding retraction step. In this way a single cutting cycle of the manufactured article "M" is defined. In other terms, the cutting cycle comprises the operations required for cutting a single segment "S". The cutting cycle is obviously repeatable any number of times, such as to be able to produce any number of segments "S" of a predetermined length starting from a single manufactured article "M" produced with a continuous process.

In detail, a plurality of advancement steps can be performed as described above, each followed by a corresponding retracting step.

To extract a sample "C" from the manufactured article "M", the single cutting cycle can optionally comprise further operations.

In particular, following the activation of the cutting device 3 it is possible to slow the cutting device 3 down such as to cause it to advance with a slower speed with respect to the speed of advancement of the manufactured article "M".

Note that in the method of the present invention, during the slowing step the speed of advancement of the cutting device 3 is in a same direction as the speed of advancement of the manufactured article "M". Further, during the slowing step the speed of advancement of the cutting device 3 is lower than the speed of advancement of the manufactured article "M". In other terms, the cutting device 3 does not invert movement thereof during the slowing step, but continues to advance, though at a slow speed. On the basis of production data, in the step following the cut of the length "P1" the cutting device 3 might be commanded to proceed in an opposed direction to the advancement direction of the manufactured article "M".

In particular, following the slowing step, a re-synchronisation step of the cutting device 3 is carried out. The speed of advancement of the cutting device 3 is newly synchronized with the speed of advancement of the manufactured article "M" such as to position the cutting device 3 at a predetermined second cutting zone "Z2". Thereafter the cutting device 3 is newly activated such as to cut a second portion "Z2" of the manufactured article "M".

The whole operation is carried out with the objective of maintaining the performance of the plant. For this reason, to cut the second portion P2 the cutting device 3 is activated using working parameters characterised by a speed of execution of the cutting cycle that is significantly greater than the velocity of the usual cycle for the cutting of a first portion P2. In particular, to manage the operation a reconditioning of the cutting parameters is operated using cutting and speed of advancement that are significantly greater than the standard ones used for cutting the sections "S". The reconditioning can be set for one or for both the consecutive cuts according to the performances required by the plant.

In particular, the working parameters can also be used (cutting speed) for cutting the portion P1 immediately preceding the cut of the second portion P2.

Thereafter, the above-described step of retracting the cutting device 3 is carried out.

The present invention attains the set aims. In particular, the possibility of repeating the synchronization step within a single cycle enables performing a second cut and collecting a sample of manufactured article having a smaller length, thus avoiding waste.

Furthermore, as the method comprises two cuts with a single cutting device, further equipment is not necessary and consequently there is a significant reduction in dimensions and costs.

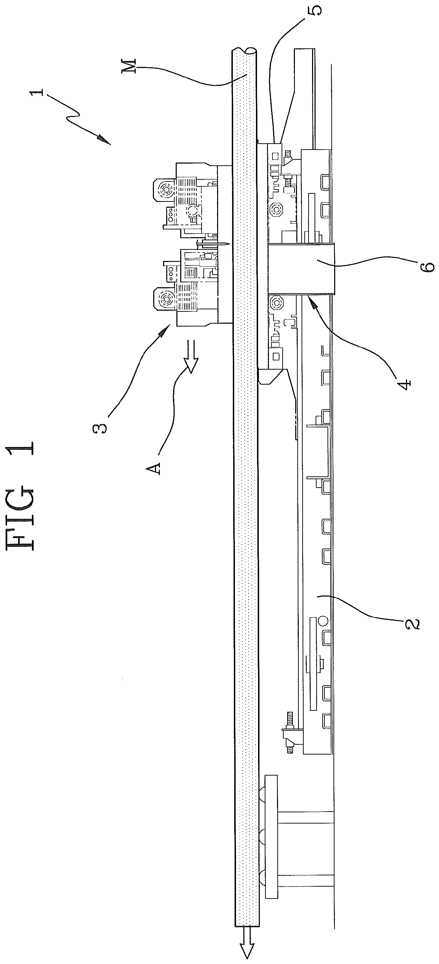

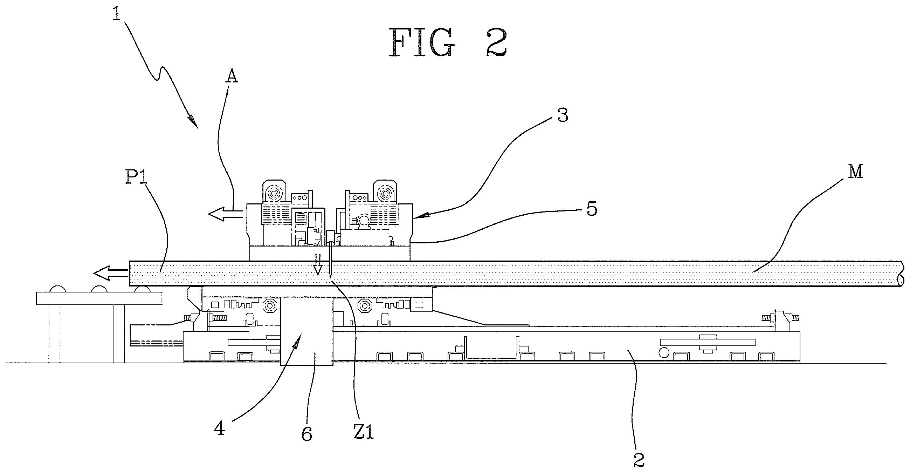

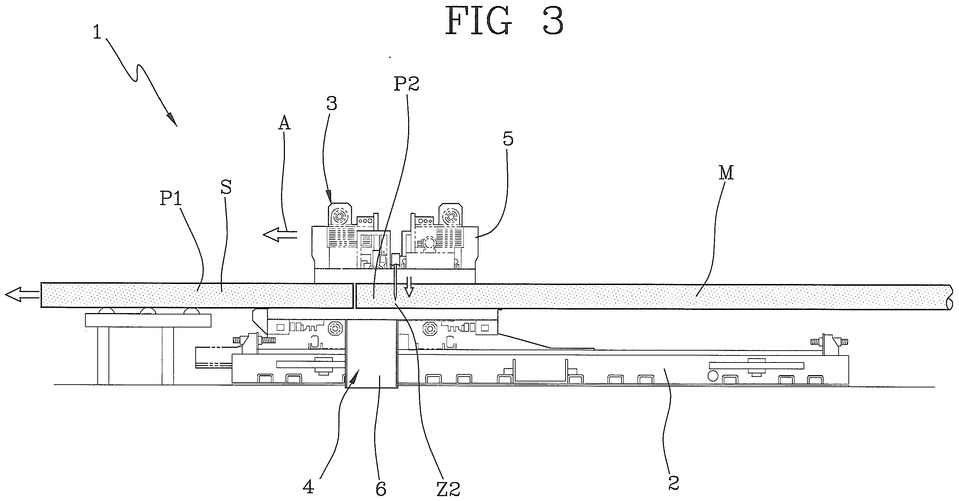

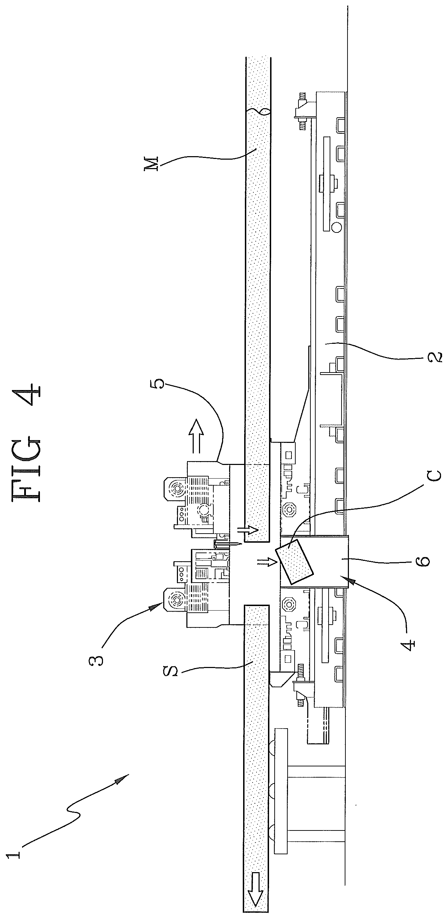

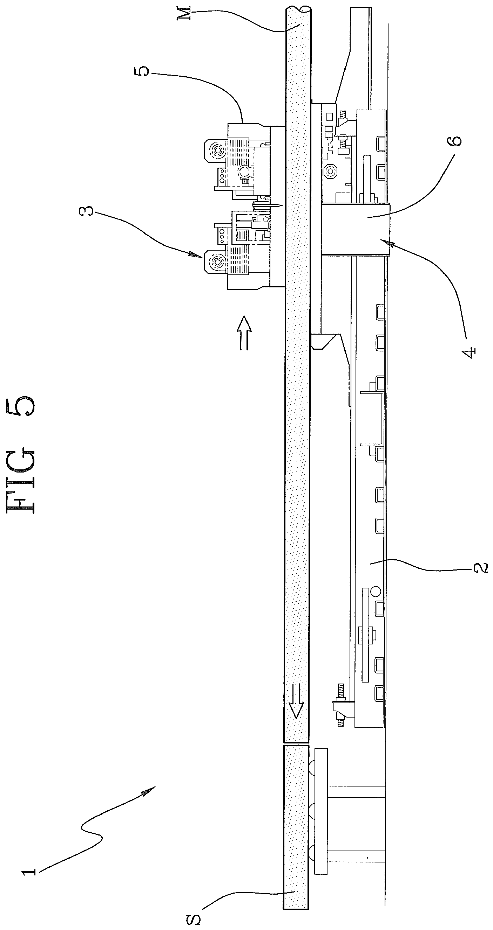

## Claims

1. A method for cutting manufactured articles (M), comprising the steps of advancing a manufactured article (M) along an advancement direction (A) with a predetermined speed; predisposing a cutting device (3) in a stroke start position, said cutting device (3) being associated with said manufactured article (M) and movable along said advancement direction (A); advancing said cutting device (3) along said advancement direction (A); synchronizing the speed of advancement of said cutting device (3) with the speed of advancement of said manufactured article (M) so as to position said cutting device (3) at a predetermined first cutting zone (Z1) of said manufactured article (M); activating said cutting device (3) so as to cut a first portion (P1) of said manufactured article; **characterized in that** it comprises, within the same forward step, the further step of slowing down said cutting device (3) so as to advance it with a speed that is lower, null or possibly in an opposed direction, with respect to the speed of advancement of the manufactured article (M), and comprises the further steps of resynchronization of the speed of advancement of said cutting device (3) with the speed of advancement of said manufactured article (M) so as to position said cutting device (3) at a predetermined second cutting zone (Z2) of said manufactured article (M); activating said cutting device (3) so as to cut a second portion (P2) of said manufactured article (M) of shorter length with respect to P1.

2. A method for cutting manufactured articles (M) according to claim 1, **characterized in that** said cutting device (3) for cutting said second portion (P2) can be activated by employing job parameters **characterized by** speeds for the performance of the cutting cycle that are decidedly higher than the speeds of the usual cycle for cutting a said first portion P1.

3. The method for cutting manufactured articles (M) according to claim 2, **characterized in that** during performance of the cycle mentioned, the said job parameters distinguished by speeds for the performance of the cutting cycle that are decidedly higher than the speeds of the usual cycle for cutting a said first portion P1 can be activated also for cutting the first portion P1 immediately preceding the cutting of the second portion P2.

4. The method for cutting manufactured articles (M) according to any one of the preceding claims, **characterized in that** said resynchronization step follows said step of cutting the first portion (P1).

5. A machine (1) for cutting manufactured articles (M), comprising a guide (2) oriented along an advancement direction (A) of a manufactured article (M); a cutting device (3) that is movable along said guide (2) and that can be associated with said manufactured article (M) so as to advance along said advancement direction (A); means for synchronization of the speed of advancement of said cutting device (3) with the speed of advancement of said manufactured article (M) so as to position said cutting device (3) at a predetermined first cutting zone (Z1) of said manufactured article (M) and to cut said manufactured article (M); **characterized in that** it comprises means for resynchronization arranged so as to resynchronize, within the same cutting cycle, the speed of advancement of said cutting device (3) with the speed of advancement of said manufactured article (M), so as to position said cutting device (3) at a predetermined second cutting zone (Z2) of said manufactured article (M) and to cut a second portion (P2) of said manufactured article (M).

6. The machine (1) according to the preceding claim, **characterized in that** it comprises means for evacuation (4) of a portion of said manufactured article (M); said means for evacuation (4) being movable along said guide (2).

7. The machine (1) according to the preceding claim, **characterized in that** said means for evacuation (4) are solidly constrained to said cutting device (3) so as to translate along said guide (2) together with said cutting device (3).

8. The machine (1) for cutting manufactured articles (M) according to claim 8 or 9, **characterized in that** it comprises a carriage (5) that is movable along said guide (2), said cutting device (3) being fixed to said carriage (5); said means for evacuation (4) comprising for example a chute (6) fixed to said carriage (5).

## Patentansprüche

1. Verfahren zum Schneiden hergestellter Artikeln (M), umfassend die Schritte zur Förderung eines hergestellten Artikels (M) entlang einer Förderungsrichtung (A) mit einer vorgegebenen Geschwindigkeit; Vorbereitung einer Schneideinrichtung (3) in einer Hubstartposition, wobei die genannte Schneideinrichtung (3) mit dem genannten hergestellten Artikel (M) verbunden ist und entlang der genannten Förderungsrichtung (A) beweglich ist; Förderung der genannten Schneideinrichtung (3) entlang der genannten Förderungsrichtung (A); Synchronisierung der Förderungsgeschwindigkeit der genannten Schneideinrichtung (3) mit der Förderungsrichtung des genannten hergestellten Artikels (M), damit die Schneideinrichtung (3) in einer vorgegebenen ersten Schnittzone (Z1) des genannten hergestellten Artikels (M) positioniert wird; Aktivierung der genannten Schneideinrichtung (3), um einen ersten Teil (P1) des genannten hergestellten Artikels zu schneiden; **dadurch gekennzeichnet, dass** es, innerhalb des gleichen Vorwärtsschritts, den weiteren Schritt von Verlangsamung der genannten Schneideinrichtung (3) umfasst, damit sie mit einer Geschwindigkeit gefördert wird, die geringer, null oder möglicherweise in eine entgegengesetzte Richtung, in Bezug auf die Förderungsgeschwindigkeit des genannten Artikels (M) ist, und die weiteren Schritte der Resynchronisierung der Förderungsgeschwindigkeit der genannten Schneideinrichtung (3) mit der Förderungsgeschwindigkeit des hergestellten Artikels (M) umfasst, damit die genannte Schneideinrichtung (3) in einer vorgegebenen zweiten Schnittzone (Z2) des genannten hergestellten Artikels (M) positioniert wird; Aktivierung der genannten Schneideinrichtung (3), um einen zweiten Teil (P2) dieses genannten hergestellten Artikels (M) mit kürzerer Länge in Bezug auf P1 zu schneiden.

2. Verfahren zum Schneiden hergestellter Artikeln (M) nach Anspruch 1, **dadurch gekennzeichnet, dass** die genannte Schneideinrichtung (3) zum Schneiden des zweiten Teils (P2) unter Verwendung von Job-Parametern aktiviert werden kann, die durch Geschwindigkeiten für die Durchführung des Schnitt-Zyklus gekennzeichnet sind, die deutlich höher als die Geschwindigkeiten des üblichen Zyklus zum Schneiden eines genannten ersten Teils P1 sind.

3. Verfahren zum Schneiden hergestellter Artikeln (M) nach Anspruch 2, **dadurch gekennzeichnet, dass** die genannten Job-Parameter, die sich durch Geschwindigkeiten für die Durchführung des Schnitt-Zyklus unterscheiden, die deutlich höher als die Geschwindigkeiten des üblichen Zyklus zum Schneiden eines genannten ersten Teils P1 sind, beim genannten Zyklusablauf auch zum Schneiden des ersten Teils P1 unmittelbar vor dem Schneiden des zweiten Teils P2 aktiviert werden können.

4. Verfahren zum Schneiden hergestellter Artikeln (M) nach einem der vorhergehenden Ansprüche, **dadurch gekennzeichnet, dass** der genannte Resynchronisierungsschritt dem genannten Schritt vom Schneiden des ersten Teils (P1) folgt.

5. Maschine (1) zum Schneiden hergestellter Artikeln (M), umfassend eine Führung (2), die entlang einer Förderungsrichtung (A) eines hergestellten Artikels (M) orientiert ist; eine Schneideinrichtung (3), die entlang dieser genannten Führung (2) beweglich ist und die mit dem genannten hergestellten Artikel (M) verbunden werden kann, um entlang der genannten Förderungsrichtung (A) gefördert zu werden; Mittel zur Synchronisierung der Förderungsgeschwindigkeit der genannten Schneideinrichtung (3) mit der Förderungsgeschwindigkeit des genannten hergestellten Artikels (M), damit die Schneideinrichtung (3) in einer vorgegebenen ersten Schnittzone (Z1) des genannten hergestellten Artikels (M) positioniert wird und um den genannten hergestellten Artikel (M) zu schneiden; **dadurch gekennzeichnet, dass** sie Mittel zur Resynchronisierung umfasst, die für die Resynchronisierung, innerhalb des gleichen Zyklusablaufs, der Förderungsrichtung der genannten Schneideinrichtung (3) mit der Geschwindigkeit der Förderungsgeschwindigkeit des genannten hergestellten Artikels (M) angeordnet sind, damit die genannte Schneideinrichtung (3) in einer vorgegebenen zweiten Schnittzone (Z2) des genannten hergestellten Artikels (M) positioniert wird und um einen zweiten Teil (P2) des genannten hergestellten Artikels (M) zu schneiden.

6. Maschine (1) nach dem vorhergehenden Anspruch, **dadurch gekennzeichnet, dass** sie Mittel für die Evakuierung (4) eines Teils des genannten hergestellten Artikels (M) umfasst; diese genannten Mittel für die Evakuierung (4) sind beweglich entlang dieser Führung (2).

7. Maschine (1) nach dem vorhergehenden Anspruch, **dadurch gekennzeichnet, dass** die genannten Mittel für die Evakuierung (4) auf der genannten Schneideinrichtung (3) fest gehalten sind, um entlang dieser genannten Führung (2) zusammen mit der genannten Schneideinrichtung (3) zu gleiten.

8. Maschine (1) zum Schneiden hergestellter Artikeln (M) nach Anspruch 8 oder 9, **dadurch gekennzeichnet, dass** sie einen Wagen (5) umfasst, der entlang dieser Führung (2) beweglich ist, wobei die genannte Schneideinrichtung (3) am genannten Wagen (5) befestigt ist; wobei die genannten Mittel für die Evakuierung (4) beispielsweise eine Rutsche (6) umfassen, die am genannten Wagen (5) befestigt ist.

## Revendications

1. Procédé de coupe d'articles manufacturés (M), comprenant les étapes consistant à faire avancer un article manufacturé (M) le long d'une direction de progression (A) selon une vitesse prédéfinie ; à prédisposer un dispositif de coupe (3) dans une position de début de course, ledit dispositif de coupe (3) étant associé au dit article manufacturé (M) et mobile le long de ladite direction de progression (A) ; à faire avancer ledit dispositif de coupe (3) le long de ladite direction de progression (A) ; à synchroniser la vitesse de progression dudit dispositif de coupe (3) avec la vitesse de progression dudit article manufacturé (M) de manière à positionner ledit dispositif de coupe (3) au niveau d'une première zone de coupe prédéfinie (Z1) dudit article manufacturé (M) ; à activer ledit dispositif de coupe (3) de manière à couper une première partie (P1) dudit article manufacturé ; **caractérisé en ce qu'**il comprend, à l'intérieur de la même étape vers l'avant, l'étape supplémentaire consistant à ralentir ledit dispositif de coupe (3) de manière à le faire avancer à une vitesse étant inférieure, nulle ou si possible, dans une direction opposée par rapport à la vitesse de progression de l'article manufacturé (M), et comprend les étapes supplémentaires de resynchronisation de la vitesse de progression dudit dispositif de coupe (3) selon la vitesse de progression dudit article manufacturé (M) de sorte à positionner ledit dispositif de coupe (3) au niveau d'une seconde zone de coupe prédéfinie (Z2) dudit article manufacturé (M) ; à activer ledit dispositif de coupe (3) de manière à couper une seconde partie (P2) dudit article manufacturé (M) d'une longueur plus courte par rapport à P1.

2. Procédé de coupe d'articles manufacturés (M) selon la revendication 1, **caractérisé en ce que** ledit dispositif de coupe (3) servant à couper ladite seconde partie (P2) peut être activé en employant des paramètres de travail **caractérisés par** des vitesses d'exécution du cycle de coupe étant vraiment supérieures aux vitesses d'un cycle habituel de coupe d'une dite première partie P1.

3. Procédé de coupe d'articles manufacturés (M) selon la revendication 2, **caractérisé en ce que** lors de l'exécution du cycle mentionné, lesdits paramètres de travail, distingués par des vitesses d'exécution du cycle de coupe étant vraiment supérieures aux vitesses du cycle habituel de coupe d'une dite première partie P1, peuvent aussi être activés pour couper la première partie P1 précédent immédiatement la coupe de la seconde partie P2.

4. Procédé de coupe d'articles manufacturés (M) selon l'une quelconque des revendications précédentes, **caractérisé en ce que** ladite étape de resynchronisation suit ladite étape de coupe de la première partie (P1).

5. Machine (1) de coupe d'articles manufacturés (M), comprenant un guide (2) orienté le long d'une direction de progression (A) d'un article manufacturé (M) ; un dispositif de coupe (3) étant mobile le long dudit guide (2) et pouvant être associé au dit article manufacturé (M) de manière à avancer le long de ladite direction de progression (A) ; des moyens de synchronisation de la vitesse de progression dudit dispositif de coupe (3) avec la vitesse de progression dudit article manufacturé (M) de manière à positionner ledit dispositif de coupe (3) au niveau d'une première zone de coupe prédéfinie (Z1) dudit article manufacturé (M) et à couper ledit article manufacturé (M) ; **caractérisée en ce qu'**elle comprend des moyens de resynchronisation disposés de sorte à resynchroniser, à l'intérieur du même cycle de coupe, la vitesse de progression dudit dispositif de coupe (3) avec la vitesse de progression dudit article manufacturé (M), de manière à positionner ledit dispositif de coupe (3) au niveau d'une seconde zone de coupe prédéfinie (Z2) dudit article manufacturé (M) et à couper une seconde partie (P2) dudit article manufacturé (M).

6. Machine (1) selon la revendication précédente, **caractérisée en ce qu'**elle comprend des moyens d'évacuation (4) d'une partie dudit article manufacturé (M) ; lesdits moyens d'évacuation (4) étant mobiles le long dudit guide (2).

7. Machine (1) selon la revendication précédente, **caractérisée en ce que** lesdits moyens d'évacuation (4) sont solidaires dudit dispositif de coupe (3) de manière à translater le long dudit guide (2) avec ledit dispositif de coupe (3).

8. Machine (1) de coupe d'articles manufacturés (M) selon la revendication 8 ou 9, **caractérisée en ce qu'**elle comprend un chariot (5) étant mobile le long dudit guide (2), ledit dispositif de coupe (3) étant fixé au dit chariot (5) ; lesdits moyens d'évacuation (4) comprenant par exemple une glissière (6) fixée au dit chariot (5).
